# FASCICULE DE BREVET EUROPEEN

(11) **EP 1 509 794 B1**
(45) Date de publication et mention de la délivrance du brevet: **21.02.2007**
(21) Numéro de dépôt: 03756041.4
(22) Date de dépôt: 02.06.2003
(51) Int. Cl.: G02B 6/34, G02B 6/42, H04J 14/02, G02B 5/20

(54) **COMPOSANT DE FILTRAGE OPTIQUE**
OPTISCHE FILTRIERUNGSEINRICHTUNG
OPTICAL FILTRATION DEVICE

(30) Priorité: 04.06.2002 FR 0206853
(43) Date de publication de la demande: 02.03.2005
(73) Titulaire: E2V SEMICONDUCTORS, 38120 Saint Egreve (FR)
(72) Inventeur: HUGON, Xavier, Thales Intellectual Property, F-94117 Arcueil cedex (FR); MOY, Jean-Pierre, Thales Intellectual Property, F-94117 Arcueil Cedex (FR); RAMEL, Romain, Thales Intellectual Property, F-94117 Arcueil cedex (FR)
(74) Mandataire: Collet, Alain
(86) Numéro de dépôt international: PCT/FR2003/001653
(87) Numéro de publication internationale: WO 2003/102654

(56) Documents cités:
- EP-A- 0 547 597
- GB-A- 2 117 131
- US-A- 5 803 729
- PATENT ABSTRACTS OF JAPAN vol. 1997, no. 12, 25 décembre 1997 (1997-12-25) -& JP 09 211383 A (NIPPON TELEGR &TELEPH CORP <NTT>), 15 août 1997 (1997-08-15)

## Description

L'invention concerne les filtres optiques sélectifs en longueur d'onde, permettant de laisser passer la lumière d'une bande spectrale optique étroite, centrée autour d'une longueur d'onde, et de réfléchir les longueurs d'onde situées en dehors de cette bande. On peut prévoir l'ajustement de la longueur d'onde centrale de la bande spectrale étroite par des moyens électriques.

Le mot lumière est entendu au sens large et inclut notamment des bandes spectrales dans l'infrarouge comme on le verra ci-après, une application principale de l'invention étant le filtrage de lumière dans les différentes bandes de télécommunications par fibres optiques comprises entre 1,3 et 1,61 micromètres.

L'intérêt de ces bandes de 1,3 à 1,61 micromètres résulte de ce que les fibres optiques actuelles, en verre, présentent une faible atténuation et que les signaux optiques peuvent donc être transmis sur de très grandes distances. Dans ce qui suit, on expliquera l'invention à propos de cette bande spectrale, étant entendu que l'invention est transposable à d'autres bandes si le besoin s'en fait sentir, en utilisant les matériaux adaptés à ces bandes différentes.

Dans un réseau de télécommunications par fibre optique, on peut utiliser un câble de plusieurs fibres optiques pour réaliser plusieurs canaux de transmission différents ; on peut aussi effectuer un multiplexage temporel des informations pour atteindre le même but ; mais la tendance actuelle, pour un accroissement plus important de la capacité de débit d'informations du réseau, est de transmettre simultanément sur la même fibre optique plusieurs longueurs d'onde lumineuses modulées indépendamment les unes des autres et définissant chacune un canal d'information. La norme ITU (International Telecommunications Union) 692 propose de définir des canaux adjacents de largeur de bande spectrale optique 100 GHz, centrés sur N fréquences optiques normalisées adjacentes dont les valeurs sont 200 térahertz, 199,9 térahertz, 199,8 térahertz, etc., correspondant à N longueurs d'onde de 1,52 micromètres jusqu'à 1,61 micromètres. Sur un canal de cette largeur de bande on peut effectuer une modulation de lumière de 10 à 40 Giga bits par seconde sans trop de risque d'interférence avec les canaux de bandes spectrales immédiatement adjacentes (en utilisant des impulsions de modulation de forme gaussienne pour minimiser la bande passante occupée par cette modulation). Cette technique de multiplexage fréquentiel est appelée DWDM, de l'anglais "Dense Wavelength Division Multiplexing".

Dans un réseau de télécommunications, le problème est donc de pouvoir recueillir la lumière correspondant à un canal déterminé sans perturber la lumière des canaux voisins. Par exemple, à un noeud de transmission du réseau, affecté à l'émission et à la réception d'informations du canal i, il faut pouvoir recueillir la lumière à une fréquence centrale Fᵢ (longueur d'onde λᵢ) sans gêner la transmission de la lumière modulant les fréquences centrales F₁ à F_{N}, alors que ces fréquences optiques sont très rapprochées les unes des autres.

Pour cela, on a besoin de réaliser des composants de filtrage optique très sélectifs en longueur d'onde lumineuse, capables de laisser passer la fréquence optique centrale F₁ et les fréquences situées dans une bande étroite inférieure à 50 GHz de part et d'autre de cette fréquence, et d'arrêter les autres bandes. A la sortie d'un tel filtre, on ne recueille que la lumière du canal i et on peut la démoduler pour recueillir l'information utile, ou l'envoyer dans une autre branche du réseau.

On a déjà proposé de réaliser des composants de filtrage fonctionnant sur le principe des interféromètres de Fabry-Perot, réalisés par dépôts de couches semi-conductrices séparées les unes des autres par des lames d'air d'épaisseurs calibrées en rapport avec la longueur d'onde λᵢ à sélectionner. Un interféromètre comprend en pratique deux miroirs à couches diélectriques superposées (miroirs de Bragg), à fort coefficient de réflexion, séparés par une lame transparente d'épaisseur optique k.λᵢ/2 (épaisseur réelle k. λᵢ/2 si la lame est une lame d'air) où k est un entier définissant l'ordre du filtre interférométrique. Le phosphure d'indium (InP) est bien adapté à ces réalisations en raison notamment de sa transparence pour les longueurs d'onde considérées, de son indice de réfraction très élevé, et de la possibilité de déposer des couches épitaxiales d'épaisseur bien contrôlée.

Si les épaisseurs de couches et les intervalles entre couches sont très bien contrôlés, et si les matériaux ont un fort indice de réfraction, un tel filtre s'avère très sélectif.

Une telle réalisation est décrite dans l'article de A. Spisser et autres, "Highly Selective 1.55 micrometer InP/airgap micromachined Fabry-Perot filter for optical communications" dans Electronics Letters, N°34(5), pages 453-454, 1998. D'autres réalisations ont été proposées, en silicium micro-usiné, et en alliages à base d'arséniure de gallium.

A cause des imperfections dans la réalisation des composants de filtrage et à cause de la largeur spectrale due à la modulation du signal, une fraction de la lumière autour de la longueur centrale est réfléchie par le composant de filtrage, ce qui n'est acceptable que si cette fraction est inférieure à environ 1% du signal, car ce serait une cause de brouillage du signal réfléchi, notamment lorsqu'on ajoute au rayonnement réfléchi par le composant un rayonnement de remplacement modulé sensiblement autour de la même longueur centrale. Pour satisfaire cette exigence avec des composants de filtrage fixes, on peut utiliser deux filtres disposés de telle façon que le rayonnement réfléchi par le premier filtre est à nouveau réfléchi sur le second filtre.

Cette disposition supprime les résidus de rayonnement lumineux centré autour de la longueur centrale dans le canal de sortie du composant, et ne pose pas de gros problème optique, car ces composants de filtrage sont larges et fonctionnent donc avec des faisceaux peu ouverts, pour lesquels la grande longueur de Rayleigh autorise le repliement de la trajectoire.

Les longueurs d'onde centrales des canaux sont définies par des normes (norme UIT 692 pour le Dense Wavelength Division Multiplexing). Dans le cas "Dense Wavelength Division Multiplexing", où les canaux sont séparés par à peine plus que leur largeur spectrale, chaque source lumineuse formant un canal, comme par exemple un laser, est impérativement verrouillé sur une fréquence UIT, à quelques GHz près, grâce à une référence externe. Pour des communications à courte distance et nombre réduit de canaux; on utilise souvent un autre concept où les canaux sont bien plus espacés, par exemple de 20 nm (=2500 GHz). Ce dernier concept est également défini par la norme UIT 692 avec l'appellation de "Coarse Wavelength Division Multiplexing". L'espacement est alors largement supérieur aux dérives et fluctuations thermiques ou autres par exemple de la fréquence d'émission du laser. Ces dérives sont de l'ordre de quelques centaines de GHz. On peut alors utiliser des lasers beaucoup moins coûteux, car affranchis de l'asservissement en fréquence. Il n'y a bien entendu aucune corrélation entre la longueur d'onde extraite et celle du rayonnement de remplacement. Avec un filtre accordable à bande étroite et poursuite de la longueur d'onde incidente, on peut extraire un rayonnement de longueur d'onde centrale donnée, mais on ne peut injecter un rayonnement de remplacement dans le canal laissé vacant, car le filtre n'est en général pas transparent au rayonnement de remplacement. Le principe décrit plus haut est donc difficilement applicable, car le second filtre, accordé sur la longueur d'onde du rayonnement de remplacement, ne rejettera pas les résidus de rayonnement lumineux centré autour de la longueur centrale du rayonnement extrait.

Le problème est donc de trouver une configuration qui permette d'utiliser un filtre accordable à bande étroite et poursuite de longueur d'onde dans un multiplexeur, en offrant une bonne réjection de la longueur d'onde extraite et une bonne injection de la longueur d'onde de remplacement.

Le document JP09211383 décrit un composant de filtrage optique ayant les caractéristiques spécifiées dans le préambule de la revendication 1.

La présente invention propose un composant de filtrage optique avec les caractéristiques résumées dans la revendication 1.

Les filtres accordables ont en général des dimensions beaucoup plus petites que celles des filtres fixes centrés par construction autour d'une longueur d'onde donnée.

Pour des filtres fixes, c'est à dire centrés par construction autour d'une longueur d'onde donnée, on a réalisé un double passage en utilisant un guide d'onde pour chaque entrée et un guide d'onde pour chaque sortie du filtre. La transposition directe d'une telle réalisation avec un filtre accordable pose d'énormes problèmes de positionnement dans l'espace de chaque guide d'onde. L'invention résout également ce problème en limitant le nombre de composants à positionner entre eux.

On note que la première partie du rayonnement est la plus grande partie du rayonnement. Plus précisément, le rayonnement comporte plusieurs canaux centrés chacun autour d'une longueur d'onde. Le filtre permet d'extraire un des canaux et de réfléchir les autres. Ces autres canaux forment la première partie du rayonnement.

Avantageusement, le composant comporte des moyens pour accorder la longueur d'onde donnée. Autrement dit l'invention trouve un avantage particulier dans le cas où le filtre est accordable.

L'invention sera mieux comprise et d'autres avantages apparaîtront à la lecture de la description détaillée d'un mode de réalisation de l'invention donné à titre d'exemple, description illustrée par le dessin joint dans lequel :
- la figure 1 représente un exemple de chemin optique dans un composant de filtrage optique conforme à l'invention.
- les figures 2, 3 et 4 représentent des exemples de guides d'onde permettant de réaliser des moyens de renvoi ;
- la figure 5 illustre l'alignement des moyens de renvoi avec le filtre ;
- la figure 6 illustre l'injection d'un rayonnement de remplacement en sortie du composant optique de filtrage.

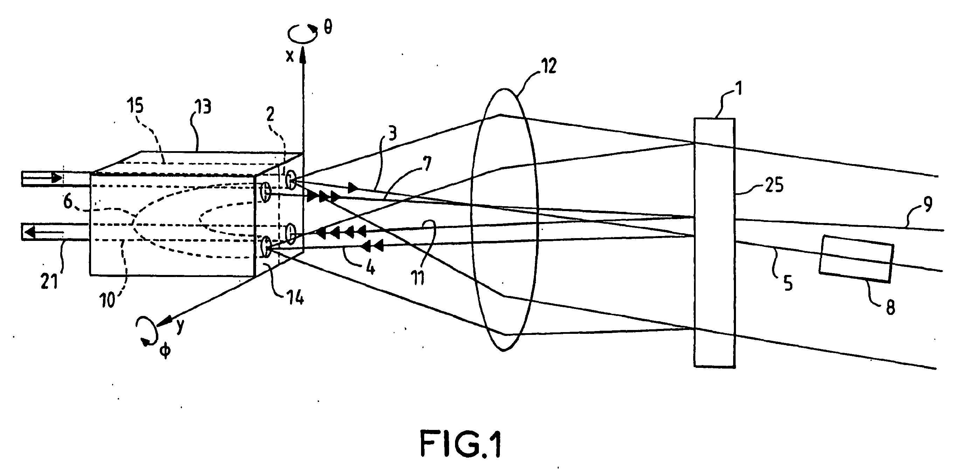

Le composant de filtrage optique représenté sur la figure 1 comporte un filtre 1 sélectif en longueur d'onde apte à transmettre la lumière d'une bande spectrale optique étroite et à réfléchir la lumière dont la longueur d'onde est hors de cette bande. Le filtre 1 est, par exemple, réalisé conformément à l'article de A. Spisser cité plus haut. Le composant comporte, en outre, un guide d'entrée 2 conduisant un rayonnement 3 lumineux vers le filtre 1 pour y effectuer un premier passage. A l'issue de ce premier passage, une première partie 4 du rayonnement 3 est réfléchie par le filtre 1 tandis qu'une seconde partie 5 du rayonnement 3 est transmise par le filtre 1 conformément à la sélectivité du filtre 1. Le composant comporte, de plus, des moyens de renvoi 6. Ces moyens 6 collectent la première partie 4 du rayonnement 3 pour la renvoyer vers le filtre 1 afin d'y effectuer un second passage. En sortie des moyens de renvoi 6, le trajet de la première partie 4 du rayonnement 3 est matérialisé par le segment 7.

Le composant de filtrage optique comporte un premier guide de sortie et des moyens de focalisation associés conduisant la seconde partie 5 du rayonnement 3. Une troisième partie 9 du rayonnement 3 est transmise par le filtre 1 lors du second passage. Cette troisième partie 9 constitue un résidu éliminé de la première partie 4 du rayonnement 3. Le composant de filtrage optique comporte également un second guide de sortie 10 conduisant une quatrième partie 11 du rayonnement 3 partie 11 réfléchie par le filtre 1 lors du deuxième passage dans le filtre 1. La quatrième partie 11 du rayonnement 3 est formée par la première partie 4 à laquelle on a enlevé la troisième partie 9.

Avantageusement, les moyens de renvoi 6 orientent la première partie 4 du rayonnement 3 vers le filtre 1, avec la même incidence que le guide d'entrée 2.

La longueur d'onde centrale de la bande spectrale optique transmise par le filtre 1 dépend de l'orientation ou incidence avec laquelle un rayonnement pénètre dans le filtre 1. Autrement dit l'égalité des incidences permet de conserver au filtre une même fonction de transfert lors des deux passages dans le filtre. On comprend alors l'avantage procuré par une incidence égale du rayonnement 3 et de sa quatrième partie 4 lors de son trajet 7.

L'égalité des incidences n'est bien entendue effective qu'aux tolérances de réalisation près. L'égalité des incidences au cours des deux passages doit être précise si on souhaite un pic de transmission étroit du filtre 1. Par exemple, si on a une largeur spectrale à mi-hauteur du pic de transmision de 0,5 nm, un déplacement maximal de 0.1 nm est tolérable entre les deux passages. Ceci correspond à une variation d'incidence de quelques milliradians pour des incidences proches d'une incidence perpendiculaire au filtre 1.

Pour que le rayonnement incident sur le filtre soit raisonnablement collimaté, le composant comporte des moyens de collimation communs au guide d'entrée 2, aux moyens de renvoi 6, et au second guide de sortie 10. Plus précisément, le composant comporte une lentille 12 disposée entre, d'une part, le filtre 1 et, d'autre part, le guide d'entrée 2, les moyens de renvoi 6 et le second guide de sortie 10.

Avec une lentille 12 de courte focale (distance focale de l'ordre du milimètre) comme celle que l'on utilise dans les composants pour fibres optiques, il n'est pas envisageable de placer des fibres optiques dans un plan, comme par exemple le plan focal de la lentille 12, en respectant l'identité d'incidence décrite plus haut, car le diamètre des fibres est trop grand. On pourrait imaginer de dénuder les fibres jusqu'au coeur, mais la manipulation en devient extrêmement délicate. L'objet du mode de réalisation décrit plus loin permet de pallier ce problème en utilisant les trois dimensions.

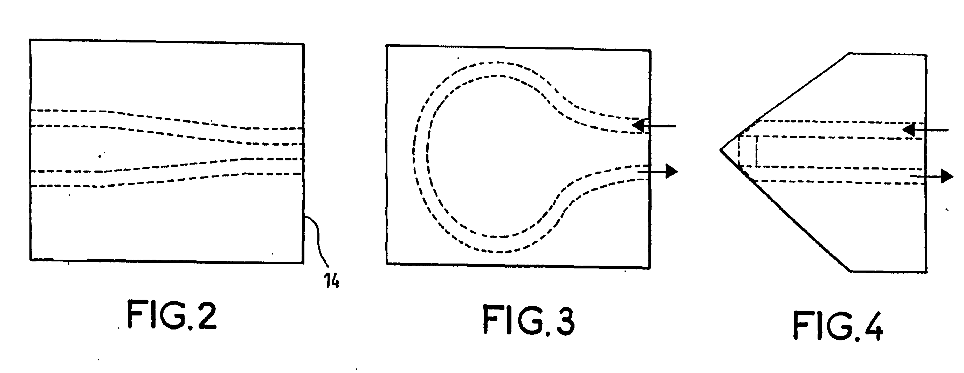

On sait réaliser des guides d'onde pour des longueurs d'onde de l'ordre de 1500 nm, bien adaptés aux fibres optiques, par des moyens de photolithographie sur une plaque de verre qui assurent une précision de positionnement bien meilleure que le micron et échange d'ions pour modifier localement l'indice de réfraction . En particulier, on sait réaliser deux guides parallèles enterrés à environ 10 µm de profondeur, et distants l'un de l'autre de quelques dizaines de microns comme illustré sur la figure 2. On sait aussi réaliser des courbes de 5 mm de rayon environ, comme illustré sur la figure 3, ce qui permet de réaliser un renvoi de faisceau. Un tel renvoi peut aussi être réalisé par polissage de deux faces à 45° et réflexion totale (dièdre), comme le montre la figure 4.

En assemblant une plaque telle que décrite sur la figure 2 et une plaque telle que décrite sur la figure 3 en superposant les guides d'onde, on peut réaliser les moyens de renvoi 6. Le même résultat peut être obtenu en assemblant une plaque telle que décrite sur la figure 2 et une plaque telle que décrite sur la figure 4. Il est alors nécessaire de positionner précisément les extrémités d'entrée et de sortie des guides des moyens de renvoi 6 dans le plan focal de la lentille 12.

Avantageusement, les moyens de renvoi 6, le guide d'entrée 2 et le second guide de sortie 10 sont immobilisés entre eux de façon à former un bloc 13 comportant une face 14 en regard avec le filtre 1. La lentille 12 est située entre la face 14 et le filtre 1. L'assemblage du bloc 13 est, par exemple, réalisé par collage de plaques de verre où des guides d'onde ont été réalisés. Le collage se fait dans un plan 15 perpendiculaire à la face 14. Les guides d'onde sont réalisés à quelques dizaines de microns du plan 15, ce qui permet une bonne isolation des guides entre eux. On peut améliorer cette isolation en déposant avant collage une couche opaque, par exemple de métal ou de résine chargée, sur une face d'une plaque de verre, face formant le plan 15.

Avantageusement, la lentille 12 est à gradient d'indice bien connue sous le nom de lentille GRIN. Ce type de lentille présente l'avantage de comporter deux faces planes. Avantageusement, on peut choisir une lentille 12 telle que son plan focal objet soit confondu avec une face d'entrée de la lentille 12. Cela permet de positionner la lentille 12 sur la face 14 du bloc 13, par exemple en observant au microscope la face 14 à travers la lentille 12.

Le positionnement de la lentille 12 est délicat, et peut se faire de la manière suivante :

Tout d'abord, la lentille 12 (de type GRIN ou autre) est positionnée en translation, selon des axes x et y contenus dans le plan de la face 14, puis immobilisée par rapport au bloc 13 contenant les guides par des moyens mécaniques en prenant comme référence des faces du bloc 13 qui sont par construction localisées précisément par rapport aux guides. Ce positionnement est possible avec une tolérance meilleure qu'une dizaine de microns. On peut de la même manière, avant l'immobilisation de la lentille 12, positionner un capillaire dans lequel la lentille 12 peut coulisser pour le positionnement en translation suivant un axe z perpendiculaire aux axes x et y.

Ensuite, un faisceau de lumière est injecté par le guide d'entrée 2, et le filtre 1 est positionné en translation approximativement suivant les axes x et y sur le faisceau collimaté en observant par des moyens optiques une face arrière 25 du filtre 1, par exemple au moyen d'une caméra infra-rouge. La face arrière 25 du filtre 1 est opposée à celle recevant le rayonnement 3.

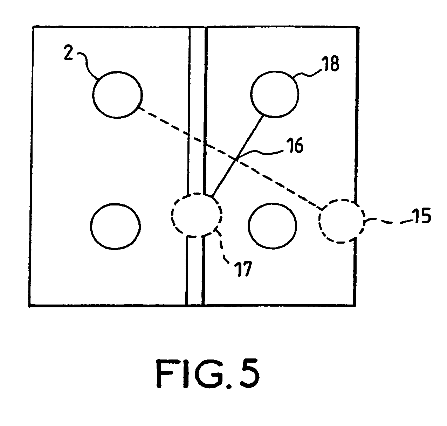

Puis l'orientation en rotation du filtre 1 autour des axes x et y, suivant respectivement des angles θ et φ, est obtenue par alignement actif selon les algorithmes classiques, par exemple en utilisant un balayage en spirale pour la recherche et l'optimisation du signal reçu. En effet, l'image 15 du guide d'entrée 2 dans le plan focal de la lentill.e 12. après la première réflexion sur le filtre 1 est symétrique du guide d'entrée 2 par rapport à l'impact de la normale 16 au filtre 1 passant par le centre de la lentille 12, comme le montre la figure 5. De même, l'image 17 de la sortie 18 des moyens de renvoi 6 qui ramène la quatrième partie 4 du rayonnement 3 dans le plan focal en vue du second passage dans le filtre 1 est également symmétrique de la sortie 18 des moyens de renvoi 6 par rapport à l'impact de la normale 16 au filtre 1. Ce schéma montre que l'alignement des deux passages dans le filtre 1 peut se faire comme en simple passage, puisqu'il n'y a pas de degré de liberté supplémentaire.

Lorsque l'optimum suivant les angles θ et φ est trouvé, on recherche le maximum de signal suivant les directions x et y et on immobilise le filtre 1.

Avantageusement, le composant comporte des moyens pour insérer un rayonnement de remplacement dont la longueur d'onde est sensiblement centrée sur la longueur d'onde donnée du rayonnement extrait dans le second guide de sortie 10. Autrement dit, le composant comporte des moyens pour insérer un rayonnement de remplacement dans le canal libéré par le rayonnement extrait.

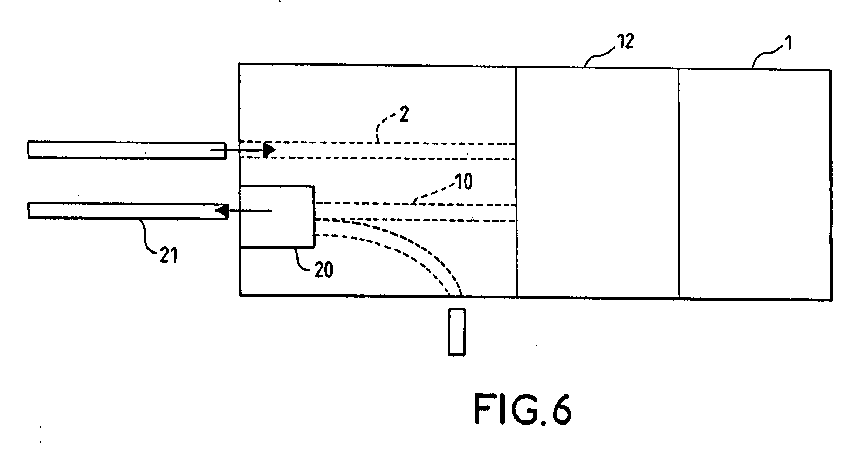

L'insertion d'un rayonnement de remplacement à une longueur d'onde voisine de la longueur d'onde extraite (mais nécessairement décorrélée de celle-ci puisque les sources de rayonnement extrait et de remplacement sont distantes et puisqu'on n'exerce aucun contrôle sur leurs dérives diverses) nécessite un coupleur 20 dans le second guide de sortie 10. Le coupleur 20 est aisément réalisable dans la technologie de guides enterrés déjà utilisée dans l'invention pour réaliser les guides du bloc 13, comme le décrit la fig 6. Cette technique est décrite sur le site Internet « www . teemphotonics . com » page « waveguide technology »

Une fibre de sortie 21 devra ensuite être positionnée de façon active à la sortie du coupleur 20.

La technique des guides optiques dans le verre s'applique également aux verres dopés aux terres rares, qui permettent d'amplifier le rayonnement optique lorsqu'ils sont excités par une longueur d'onde plus courte provenant d'un laser de pompe. Cette technique est décrite dans l'article de D. Barbier publié en 1998 : « Net Gain of 27 dB with a 8.6 cm-long Er-Yb-doped glass-planar-amplifier » article cité sur le site Internet « www . teemphotonics . com » à la page : « technical articles »

On peut réaliser les guides dans un verre dopé aux terres rares pour compenser les pertes d'insertion du composant sans ajouter de composant optique supplémentaire sur le trajet. Il faut pour cela disposer sur un des cotés du composant d'une entrée optique capable de transporter un faisceau de pompe jusqu'aux guides où circule le rayonnement, et prévoir un trajet commun de la longueur appropriée, de l'ordre d'une dizaine de centimètres. Autrement dit, le composant comporte des moyens pour amplifier le rayonnement réfléchi par le filtre.

Il est à noter que, dans ce cas, une stratégie appropriée de contre-réaction peut permettre d'utiliser les moyens d'accord du filtre 1 pour également asservir la puissance de pompe et ainsi assurer un niveau constant du rayonnement extrait.

## Revendications

1. Composant de filtrage optique comportant un filtre (1) accordable et sélectif en longueur d'onde apte à transmettre la lumière d'une bande spectrale optique étroite centrée autour d'une longueur d'onde donnée et apte à réfléchir la lumière dont la longueur d'onde est hors de ladite bande; un guide d'entrée (2) conduisant un rayonnement lumineux (3) vers le filtre (1) pour y effectuer un premier passage; des moyens de renvoi (6) d'une première partie (4) du rayonnement (3) réfléchi par le filtre (1) lors du premier passage pour y effectuer un second passage; et un second guide de sortie (10) conduisant une quatrième partie (11) du rayonnement réfléchi par le filtre (1) lors du deuxième passage, **caractérisé en ce que** le composant comporte des moyens de collimation communs au guide d'entrée (2), aux moyens de renvoi (6), et au second guide de sortie (10).

2. Composant de filtrage optique selon la revendication 1, **caractérisé en** que lesdits moyens de collimation communs comportent une lentille (12) disposée entre, d'une part, le filtre (1) et, d'autre part, le guide d'entrée (2), les moyens de renvoi (6) et le second guide de sortie (10).

3. Composant de filtrage optique selon la revendication 2, **caractérisé en ce que** la lentille (12) est à gradient d'indice.

4. Composant de filtrage optique selon la revendication 3, **caractérisé en ce que** la lentille (12) est telle que son plan focal objet soit confondu avec une face d'entrée de la lentille (12).

5. Composant de filtrage optique selon l'une des revendications précédentes, **caractérisé en ce que** les moyens de renvoi (6) orientent la première partie (4) du rayonnement (3) vers le filtre (1), avec la même incidence que le guide d'entrée (2).

6. Composant de filtrage optique selon l'une des revendications précédentes, **caractérisé en ce qu'**il comporte des moyens pour accorder la longueur d'onde donnée.

7. Composant de filtrage optique selon l'une des revendications précédentes, **caractérisé en ce qu'**il comporte des moyens (20) pour insérer un rayonnement de remplacement dont la longueur est sensiblement centrée sur la longueur d'onde donnée.

8. Composant de filtrage optique selon l'une des revendications précédentes, **caractérisé en ce que** les moyens de renvoi (6) sont réalisés par des moyens de photolithographie sur une plaque de verre et échange d'ions.

9. Composant de filtrage optique selon l'une des revendications précédentes, **caractérisé en ce qu'**il comporte des moyens pour amplifier le rayonnement réfléchi par le filtre (1).

## Claims

1. Optical filtering component including a tunable and wavelength-selective filter (1) capable of transmitting the light in a narrow optical spectral band centered around a given wavelength and capable of reflecting the light whose wavelength is outside said band; an input guide (2) conducting light radiation (3) to the filter (1) in order to perform a first pass through it; means (6) for returning a first part (4) of the radiation (3) reflected by the filter (1) during the first pass in order to perform a second pass through it; and a second output guide (10) conducting a fourth part (11) of the radiation reflected by the filter (1) during the second pass, **characterized in that** the component comprises collimation means common to the input guide (2), to the return means (6) and to the second output guide (10) .

2. Optical filtering component according to claim 1, **characterized in that** said common collimation means comprise a lens (12) arranged between, on the one hand, the filter (1) and, on the other hand, the input guide (2), the return means (6) and the second output guide (10).

3. Optical filtering component according to Claim 2, **characterized in that** the lens (12) is a graded index lens.

4. Optical filtering component according to Claim 3, **characterized in that** the lens (12) is such that its object focal plane coincides with an input face of the lens (12).

5. Optical filtering component according to one of the preceding claims, **characterized in that** the return means (6) direct the first part (4) of the radiation (3) to the filter (1), with the same incidence as the input guide (2).

6. Optical filtering component according to one of the preceding claims, **characterized in that** it includes means for tuning the given wavelength.

7. Optical filtering component according to one of the preceding claims, **characterized in that** it includes means (20) for inserting replacement radiation whose length is substantially centered on the given wavelength.

8. Optical filtering component according to one of the preceding claims, **characterized in that** the return means (6) are produced by means for glass plate photolithography and ion exchange.

9. Optical filtering component according to one of the preceding claims, **characterized in that** it includes means for amplifying the radiation reflected by the filter (1).

## Patentansprüche

1. Optisches Filterbauteil, das ein abstimmbares und wellenlängenselektives Filter (1), das fähig ist, das Licht eines schmalen optischen Spektralbands, das um eine gegebene Wellenlänge herum zentriert ist, zu übertragen, und das fähig ist, das Licht zu reflektieren, dessen Wellenlänge außerhalb des Bands liegt; einen Eingangswellenleiter (2), der eine Lichtstrahlung (3) zum Filter (1) leitet, um dort einen ersten Durchgang durchzuführen; Mittel (6) zum Zurücklenken eines ersten Teils (4) der vom Filter (1) beim ersten Durchgang reflektierten Strahlung (3), um dort einen zweiten Durchgang durchzuführen; und einen zweiten Ausgangswellenleiter (10) aufweist, der einen vierten Teil (11) der vom Filter (1) beim zweiten Durchgang reflektierten Strahlung leitet, **dadurch gekennzeichnet, dass** das Teil dem Eingangswellenleiter (2), den Zurücklenkmitteln (6) und dem zweiten Ausgangswellenleiter (10) gemeinsame Kollimationsmittel umfasst.

2. Optisches Filterbauteil nach Anspruch 1, **dadurch gekennzeichnet, dass** die gemeinsamen Kollimationsmittel eine Linse (12) umfassen, die zwischen einerseits dem Filter (1) und andererseits dem Eingangswellenleiter (2), den Zurücklenkmitteln (6) und dem zweiten Ausgangswellenleiter (10) angeordnet ist.

3. Optisches Filterbauteil nach Anspruch 2, **dadurch gekennzeichnet, dass** die Linse (12) einen Indexgradienten aufweist.

4. Optisches Filterbauteil nach Anspruch 3, **dadurch gekennzeichnet, dass** die Linse (12) so ist, dass ihre Objekt-Brennebene mit einer Eingangsfläche der Linse (12) zusammenfällt.

5. Optisches Filterbauteil nach einem der vorhergehenden Ansprüche, **dadurch gekennzeichnet, dass** die zurücklenkmittel (6) den ersten Teil (4) der Strahlung (3) mit dem gleichen Einfallwinkel wie der Eingangswellenleiter (2) zum Filter (1) ausrichten.

6. Optisches Filterbauteil nach einem der vorhergehenden Ansprüche, **dadurch gekennzeichnet, dass** es Mittel aufweist, um die gegebene Wellenlänge abzustimmen.

7. Optisches Filterbauteil nach einem der vorhergehenden Ansprüche, **dadurch gekennzeichnet, dass** es Mittel (20) aufweist, um eine Ersatzstrahlung einzufügen, deren Länge im Wesentlichen auf die gegebene Wellenlänge zentriert ist.

8. Optisches Filterbauteil nach einem der vorhergehenden Ansprüche, **dadurch gekennzeichnet, dass** die Zurücklenkmittel (6) durch Fotolithographiemittel auf einer Glasplatte und Ionenaustausch hergestellt werden.

9. Optisches Filterbauteil nach einem der vorhergehenden Ansprüche, **dadurch gekennzeichnet, dass** es Mittel aufweist, um die vom Filter (1) reflektierte Strahlung zu verstärken.
